# EUROPEAN PATENT SPECIFICATION

(11) **EP 0 348 371 B1**
(45) Date of publication and mention of the grant of the patent: **18.11.1993**
(21) Application number: 89850196.0
(22) Date of filing: 14.06.1989
(51) Int. Cl.: B23B 51/02

(54) **Drill**
Bohrer
Foret

(30) Priority: 23.06.1988 SE 8802382
(43) Date of publication of application: 27.12.1989
(73) Proprietor: SANDVIK AKTIEBOLAG, 811 81 Sandviken (SE)
(72) Inventor: Aage, Valdemar Roos, S-810 65 Skärplinge (SE)
(74) Representative: Taquist, Lennart

(56) References cited:
- EP-A- 202 211
- WO-A-84/03241
- DE-C- 384 720
- DE-C- 502 385
- US-A- 3 040 605

## Description

The present invention relates to a drill comprising a drill body provided with a drill tip having cutting elements and chip flutes, said drill tip being detachably attached to the front surface of said drill body by fastening means whereby the underneath surface of the drill tip and the front surface of said drill body having a centrally located extension and a corresponding recess.

A drill of the aforementioned type is disclosed in US-A-4,684,298 in which a drill tip is provided with an integral extension which, however, requires a very high accuracy at the manufacture of such drill tip in order to assure that the extension and recesses for the fastening means shall be linearly oriented with corresponding recesses in the drill body. The hard metal is very sensitive for bending forces and the integral extension of said prior drill has therefore often become broken during the drilling operation. This prior drill also is equipped with fastening means with central flushing channels. These fastening means must therefore be provided with relatively large cross-section diameters to include said channels. This results in a correspondingly reduced thickness of material at the drill tip which reduces its strength.

It is therefore a purpose of the present invention to provide a drill with easily exchangeable cutting elements. It is another purpose of the invention to provide a drill with an accurately oriented drill tip.

It is another purpose of the invention to provide a drill with a reliable connection between the drill body and its associated drill tip.

It is another purpose of the invention to provide a drill tip with improved strength.

It is yet another purpose of the invention to provide a drill tip having externally provided flushing channels in order to transmit flushing medium.

The invention will be more clearly described hereinafter in connection with the appended drawings wherein further characterizing features and advantages will become apparent.

Fig. 1 shows a drill according to the invention in a side view.

Fig. 2 shows a drill according to the invention in a top view.

Fig. 3 and 4 show a cross-sectional view of the drill according to the line III-III and IV-IV respectively in Fig. 2.

Fig. 5 to 9 show various embodiments of the centering means.

Fig. 10 and 11 show different embodiments of elastic inserts.

Fig. 12 shows a portion of a drill tip according to the invention in a cross-sectional view.

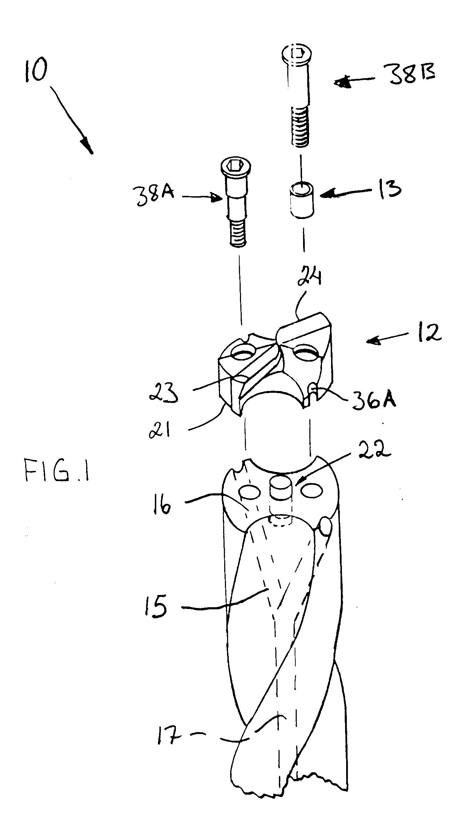

Fig. 1 shows a drill according to the invention comprising a drill body 11 and a drill tip 12, said drill having a rotary direction R. The drill is substantially cylindrically shaped and includes a shaft (not shown) in its anchoring portion and two screw shaped chip flutes 14, 15 which extend from said shaft to the opposite end of the drill body. The front surface 16 of said drill body 11 is planar and perpendicularly oriented in relation to the centre line CL of the drill. A centrally provided flushing channel 17 extends from the anchoring end to a position located axially inside the front surface 16. The channel 17 is communicating with two diametrically opposed channels 17A and 17B which terminate at the periphery of said front surface 16. A central recess 26 is provided in the front surface 16 of the drill body and a corresponding seating 40 is provided in the underneath surface 21 of the drill tip 12 to receive a resilient tap 22. The peripheral portions of said recess and said tap are made with close tolerances so that they are matching similar to a slide fitting. Their peripheral portions are preferably circular in shape but they can alternatively be oval or polygonal in shape. The chip flutes can alternatively be straight. The drill body is intended to be subject of working and hardening separately from the drill tip.

The drill tip 12 has a cylindrical basic shape the diameter of which substantially corresponds with the diameter of the drill body and it has an axial length which at the most is equal to one fifth of the length of the drill body. The drill tip is preferably made entirely of hard material and it can therefore be provided with a surface coating at high temperature without the risk of melting down the brazing material. The drill tip can also be made of high speed steel if there are workpieces of more soft material that shall be subject of machining therewith. The drill tip 12 also comprises chip flutes, which are provided as extensions of the chip flutes 14, 15 of the drill body, and cutting elements 23, 24 the radially outer portions of which extend beyond the mantle surface 12A of said drill body.

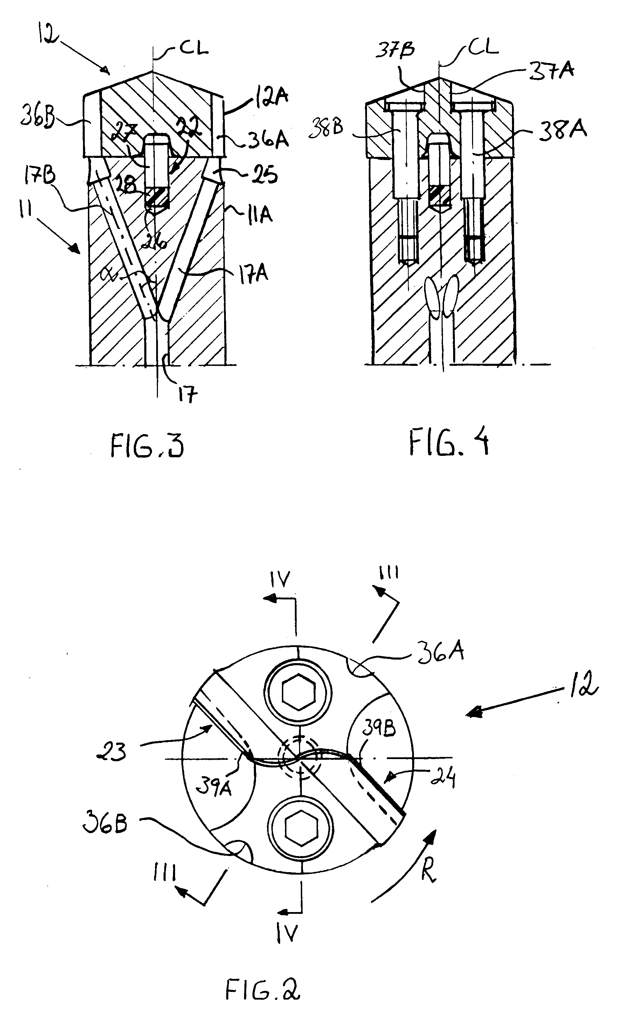

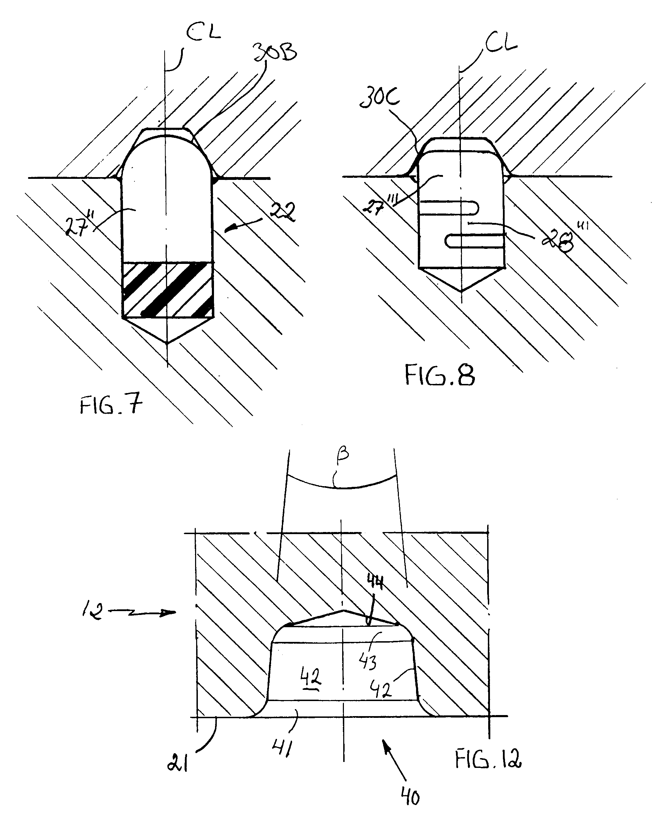

Fig. 2, 3 and 4 show the axially foremost portion of the drill shown in Fig. 1. Each of the short channels 17A and 17B is provided at an acute angle α from the centre line CL. This angle α has a value between 15° and 20° preferably about 18°. The smaller this angle α is selected, the more favorable direction of the flushing fluid is obtained. Each said short channel terminates both in the front surface 16 and in the mantle surface 11A and said drill 10 preferably by an enlarged cylindrical section 25. The cylindrical section 25 is arranged to facilitate the drilling operation in connection with the fabrication of said short channels. The recess 26 provided in front surface 16 is arranged to receive the central yielding tap 22. This tap which is shown more detailed in Fig. 3 and 4, consists of a resilient element 28 and a rigid cylindrical tap 27. The element 28 consists of an elastic material such as rubber which is vulcanized towards the axially inner end surface of said tap 27. The element 28 and the tap 27 could also be separately provided. The element 28 is at least partially provided at a larger diameter than the recess 26 so that the resilient tap 22, when entered into its recess becomes wedgingly engaged therein whereby said tap is kept in its desired axial position. The sliding fit between the recess 26 and the rigid tap 27 defines the radial position of said tap 27. The axially forward end of the tap 27 is in the Fig. 5 embodiment provided by a planar end surface 29 which via a smoothly rounded annular surface 30 terminates at the cylindrical mantle surface 31 of said tap. As shown in the Fig. 6 embodiment the end surface 29 can alternatively be connected with the mantle surface 31 via a conically bevelled face 30A. As shown in Fig. 9 the resilient tap 22 can alternatively be in the form of a spherical ball 32 and a spring 33 whereby said spring is preferably fastened at both said ball and said recess 26. The horizontal centre line CL, of said ball 32 is arranged axially behind the front surface 16 at a distance which approximately corresponds with one fifth of the radius of said ball in order to utilize the guiding ability of said ball. The axially foreward end of the tap 27˝ as shown in Fig. 7 could also be a hemispherical body 30B i.e. a portion corresponding with that part of the ball 32 which lies axially in front of the line CL₁ in Fig. 9.

Fig. 8 shows a tap 22 whereby the rigid portion 27‴ and the resilient portion 28‴ are made in one unit whereby slots 35 oriented approximately perpendicular from the centre axis of the drill are provided in the tap 22. These slots 35 will enable the tap 22 to be subject of axial compression in its axial direction. The axial extension of the tap 22 is in the order of 10 mm and its extension from the front surface 16 is approximately 1 mm.

The terms "elastic" and "resilient" are intended to mean that there is an axial compression that amounts to approximately 0.1 to 0.3 mm which is a substantially larger elasticity than the elasticity of a "rigid" steel body of corresponding dimension and applied force. In the expression "rigid" is included elasticity below the yield point of the rigid portion 27, 27′, 27˝, 27‴ and 33.

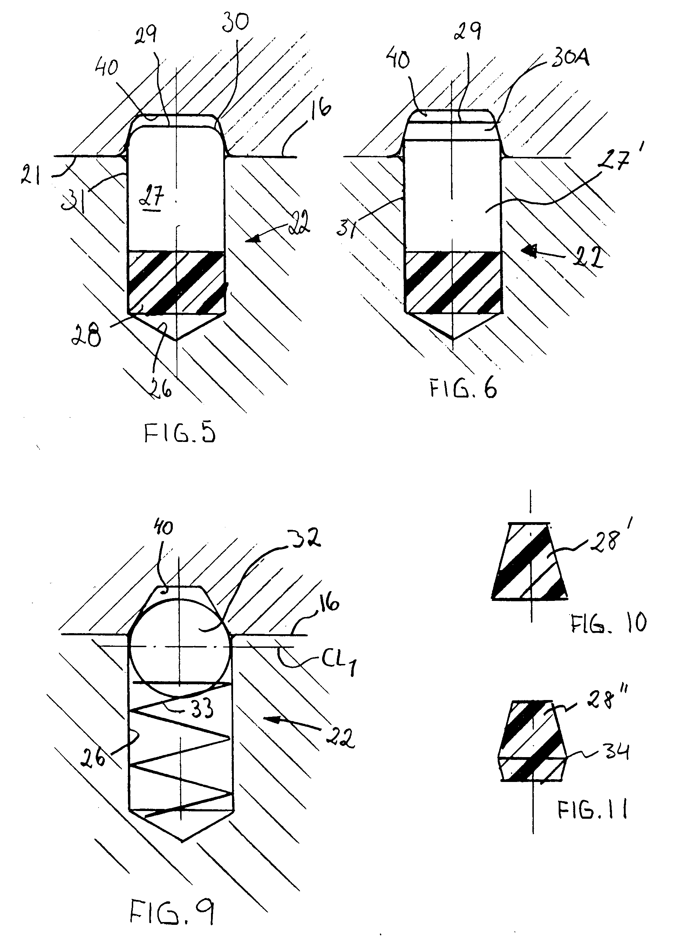

The elastic elements 28 and 33 are mutually exchangeable or exchangeable to a spring package type Belleville-springs or those alternatives shown in Fig. 10 and 11. Fig. 10 showns an elastic element 28′ in the form of a truncated cone the base of which shall be facing the bottom of recess 26 whilst having a diameter larger than the diameter of said recess. Fig. 11 shows an elastic element 28˝ shaped as a double cone provided with a peripheral upset 34. This upset 34 shall abut against the inner wall of recess 26 and the double taper will improve the radial elasticity of said element. These elastic elements 28′ and 28˝ can be provided in several different alternative ways.

By reference to the Figures a more detailed description of the drill tip will be made hereinafter. The drill tip 12 has a mainly cylindrical basic shape with a mainly planar underneath side 21 and a somewhat conical upper side. The drill tip has chip flutes which are provided as extensions of the chip flutes 14 and 15 provided in the drill body 11, The mantle surface 12A of said drill tip 12 is non-continuous in the peripheral direction not only due to the chip flutes but also due to the provision of channels 36A and 36B. These channels are provided with a mainly semi-spherical cross-section and they extend in a direction parallel to the centre line CL of the drill. These channels are provided on diametrically opposed locations and they extend from the upper side of the drill tip and down to its underneath side 21. The same extension is also applicable for two bores 37A and 37B which are provided in the drill tip 12 for the receipt of screws 38A and 38B. A sleeve 13 of soft material could be provided between the screw and its bore. The provision of these bores 37A and 37B and the screws 38A and 38B are described more in detail in Swedish application SE-C-8502450-2 = EP-A-202 211 which is herewith incorporated in the description. The channels 36A and 36B are arranged mainly with associating bores 37A and 37B in the rotary direction R of the drill.

The cutting elements 23, 24 of the drill tip have cutting edges 39A and 39B which meet in the centre of said tip under formation of an S-shaped contour and positive chip faces whereby the degree of curvature of said edges 39A and 39B is larger close to the centre line of the drill than compared with at a position more distantly therefrom. The formation of the cutting edges and the chip faces is described more in detail in Swedish patent applications SE-A 7812393-2 = SE-B-440 324 and 8105094-0 = US-A-4 565 473 which are herewith incorporated in the description.

The seating 40 of the drill tip (Fig. 12) is provided centrally thereon whilst oriented perpendicularly towards the underneath side 21. The seating 40 comprises a bevelled entry face 41 which has a cross-section, the diameter of which decreases convexly from the underneath side. The face 41 joins a decreasing or conical surface 42 the conical tip of which is directed forwardly in the direction of the drill whereby the cone angle β is about 10 to 30 degrees, preferably 14 to 20 degrees. In case the seating shall receive a spherically formed tap end it is necessary to provide a cone angle β that is at least 25 degrees. The conical surface 42 joins forwardly a terminating face 43 which has a diameter of cross section which diminishes concavely in the forward direction. This latter face 43 is inwards joining a conical bottom surface 44.

The mounting of the tip 12 on to the drill body 11 occurs in the following manner.

The resilient tap 22 is suitably provided by a rigid tap 27 and a resilient element 28, 28′, 28˝, a ball 32 and a spring 33 or a slotted tap which is entered into the central recess 26 of the drill body until the axially innermost end thereof comes into abutment with the bottom of the recess 26. The seating of the drill tip is then approximately oriented linearly with regard to the tap and the bores 37A, 37B facing corresponding threaded holes in the drill body. The seating 40 is placed above the tap 22 whereby the axially foremost end of the tap i.e. the surface 30, 30A, 30B, 30C or 32 abuts against a portion of the conical surface 42 of said seating. The screws 38A and 38B are then entered into the bores 37A and 37B respectively and are threadably engaged therein in a cross-wise pattern. The seating 40 is oriented to a central position by cooperation between the end portion of the tap and said conical surface so when a mainly circular abutment has occurred between the tap and the seating the tap is unable to penetrate further into said seating. The tap is then allowed to be displaced axially backwards and/or radially outwards into the recess 26 due to the resilience of said tap 22, max. about 0.3 mm. The underneath side 21 of the tap is then bought into abutment with the front surface 16 of the drill body whereby a stable and accurately centralized connection is obtained. The axially inner portions of the channels 36A and 36B are now oriented linearly with regard to the axially foremost portions 17A and 17B of the short channels. If the tap would not have been resilient this type of connection would have been very sensitive for tolerances in axial direction, i.a. in most cases it would not have been possible to obtain abutment between the tap 22 and the seating 40 at the same time as there is abutment between the underneath side 21 and the front surface 16.

When disassembling the tap and the drill body the screws are loosened entirely whereby the tap forces the drill tip axially outwards. The drill tip can then be easily removed from said drill body.

The invention thus relates to a drill and a releasably provided drill tip the formation of which enables that a accurately centered and stable connection is obtained.

## Claims

1. A rotary drill comprising a drill body (11), a drill tip (12) having cutting elements (23, 24) and fasteners (38A, 38B) securing said drill tip to a front end surface (16) of said drill body, said drill body having chip flutes (14, 15), the underneath side (21) of said drill tip (12) and the front end surface (16) of said drill body having a cooperating extension (22) and a recess (40), characterized in that said extension is a portion of an elastic element (22) which is intended to be subject of compression in the axial direction of the drill when entering into and cooperating with said recess (40), in that said elastic element (22) consists of a rigid portion (27, 27', 27'', 27''', 32) and a resilient portion (28, 28', 28'', 28''', 33), the resilient portion being located axially behind the rigid portion and axially behind the front surface (16) of the drill body (11), and that said recess (40) is provided with a cross-section that diminishes in the axially forward direction.

2. A drill according to claim 1, characterized in that said recess (40) is oriented centrally and perpendicularly in relation to an underneath surface (21) of the drill tip (12) and comprises an entering face portion (41) which intersects with said underneath surface (21) and which is convexly shaped whilst having a forwardly diminishing cross-section diameter, a conical surface (42) located next to said entering face (41) with a forwardly oriented cone tip, a transition face (43) which terminates at said conical surface (42) whilst being concavely shaped and with decreasing cross section diameter and a conical bottom surface (44) which intersects with said transition face (43).

3. Drill according to claim 1, characterized in that the rigid portion (27, 27', 27'', 27''') has cylindrical basic shape whereby at least a portion (30, 30A, 30B, 30C) of its axially forward end, intended to engage with said recess (40), is partially spherically or conically shaped.

4. Drill according to claim 1, characterized in that the rigid portion (32) has a spherical basic shape.

5. Drill according to any of claims 1, 3 and 5, characterized in that the resilient portion consists of rubber, a helical spring or a spring package.

6. Drill according to claims 1 to 3, characterized in that the rigid portion (27''') and the resilient portion (28''') are made integral as one unit and that slots (35) are provided in the element (22) perpendicularly in relation to the axial direction thereof.

7. Drill according to claim 5, characterized in that the resilient portion (28, 28', 28'') is made of rubber in the shape of a truncated cone, the base of which is located rearwardly relative to the axial direction of the drill or is of cylindrical basic shape, the rear end of which comprises an annular ridge (34).

8. Drill according to claim 1, characterized in that the drill body (11) comprises a central first channel (17), the axially forward end of which communicates with two other channels (17A, 17B) a portion axially behind the front surface (16), each of said other channels being oriented at an acute angle (α) with the centerline (CL) of the drill whereby each said other channel has its orifice in both the mantle surface (11A) and the front surface (16) of the drill body and said drill tip (12) having two channels (36A, 36B) oriented parallel with the centerline (CL) of the drill which are provided as recesses in the mantle surface (12A) of the drill tip whereby said latter channels (36A, 36B) are provided as continuous extensions of said other channels (17A, 17B).

## Patentansprüche

1. Drehbohrer mit einem Bohrkörper (11), einer Bohrerspitze (12) mit Schneidelementen (23, 24) und Befestigungseinrichtungen (38A, 38B) zum Befestigen der Bohrerspitze an einer vorderen Endfläche (16) des Bohrerkörpers, wobei der Bohrerkörper Spannuten (14,15) hat, die Unterseite (21) der Bohrerspitze (12) und die vordere Endfläche (16) des Bohrerkörpers eine zusammenwirkende Verlängerung (22) und eine Ausnehmung (40) haben, dadurch gekennzeichnet, daß die Verlängerung ein Teil eines elastischen Elementes (22) ist, welches der Kompression in der axialen Richtung des Bohrers unterworfen werden soll, wenn es in die Bohrung (40) eintritt und mit dieser zusammenwirkt, und daß das elastische Element (22) aus einem starren Teil (27, 27', 27'', 27''', 32) und einem federnd elastischen Teil (28, 28', 28'', 28''', 33) besteht, wobei das federnd elastische Teil axial hinter dem starren Teil angeordnet und axial hinter der vorderen Oberfläche (16) des Bohrerkörpers (11) angeordnet ist, und daß die Ausnehmung (40) mit einem Querschnitt versehen ist, der in axialer Vorwärtsrichtung abnimmt.

2. Bohrer nach Anspruch 1, dadurch gekennzeichnet, daß die Ausnehmung (40) zentral und senkrecht bezüglich einer unteren Fläche (21) der Bohrerspitze (12) ausgerichtet ist und ein Eintrittsflächenteil (41) aufweist, welches sich mit der Unterfläche (21) schneidet und das konvex gestaltet ist, während es einen nach vorn abnehmenden Querschnittsdurchmesser hat, eine konische Oberfläche (42) hat, die nächst der Eintrittsfläche (41) angeordnet ist mit einer nach vorn ausgerichteten Konusspitze, eine Übergangsfläche (43) hat, die an der konischen Fläche (42) endet, während sie konkav gestaltet ist und einen abnehmenden Querschnittsdurchmesser hat, und eine konische Bodenoberfläche (44) hat, die sich mit der Übergangsfläche (43) schneidet.

3. Bohrer nach Anspruch 1, dadurch gekennzeichnet, daß das starre Teil (27, 27', 27'', 27''') eine zylindrische Grundgestalt hat, wobei mindestens ein Teil (30, 30A, 30B, 30C) seines axialen vorderen Endes, welches mit der Ausnehmung (40) in Eingriff treten soll, teilweise kugelig oder konisch gestaltet ist.

4. Bohrer nach Anspruch 1, dadurch gekennzeichnet, daß das starre Teil (32) eine kugelförmige Grundgestalt hat.

5. Bohrer nach einem der Ansprüche 1, 3 und 4 ,dadurch gekennzeichnet, daß das elastisch federnde Teil aus Gummi, einer Schraubenfeder oder einer Federpackung besteht.

6. Bohrer nach den Ansprüchen 1 bis 3, dadurch gekennzeichnet, daß das starre Teil (27''') und das federnd elastische Teil (28''') integral als eine Einheit hergestellt sind und daß Schlitze (35) in dem Element (22) senkrecht zu seiner axialen Richtung vorgesehen sind.

7. Bohrer nach Anspruch 5, dadurch gekennzeichnet, daß das federnd elastische Teil (28, 28', 28'') aus Gummi in der Form eines schräg zulaufenden Konus hergestellt ist, dessen Basis rückwärts bezüglich der axialen Richtung des Bohrers angeordnet oder von zylindrischer Grundgestaltung ist, dessen rückwärtiges Ende einen kreisförmigen vorstehenden Grad (34) aufweist.

8. Bohrer nach Anspruch 1, dadurch gekennzeichnet, daß der Bohrerkörper (11) einen mittigen ersten Kanal (17) aufweist, dessen axial vorderes Ende mit zwei anderen Kanälen (17A, 17B) in Verbindung steht ein Teilstück axial hinter der vorderen Fläche (16), wobei jeder der anderen Kanäle unter einem spitzen Winkel (α) zur Mittellinie (CL) des Bohrers ausgerichtet ist, wobei die Öffnung jedes anderen Kanals sich sowohl in der Manteloberfläche (11A) als auch der Vorderfläche (16) des Bohrerkörpers befindet und die Bohrerspitze (12) zwei Kanäle (36A, 36B) hat, die parallel zur Mittellinie (CL) des Bohrers ausgerichtet sind, die als Ausnehmungen in der Manteloberfläche (12A) der Bohrerspitze vorgesehen sind, wobei die letzteren Kanäle (36A, 36B) als fortlaufende Verlängerungen der anderen Kanäle (17A, 17B) vorgesehen sind.

## Revendications

1. Un foret rotatif comprenant un corps (11) de foret, une pointe (12) de foret pourvue d'éléments de coupe (23, 24), et de fixations (38A, 38B) fixant ladite pointe de foret à une surface d'extrémité avant (16) dudit corps de foret, ledit corps de foret comportant des gorges (14, 15) de copeaux, le côté inférieur (21) de ladite pointe (12) de foret et la surface d'extrémité avant (16) dudit corps de foret comportant un prolongement (22) et un évidement (40) coopérants, caractérisé en ce que ledit prolongement est une partie d'un élément élastique (22) qui est prévu pour être soumis à une compression dans la direction externe du foret lorsqu'il entre dans ledit évidement (40) et coopère avec lui, en ce que ledit élément élastique (22) consiste en une partie rigide (27, 27', 27'', 27''', 32) et une partie élastique (28, 28', 28'', 28''', 33), la partie élastique étant située axialement derrière la partie rigide et axialement derrière la surface avant (16) du corps (11) de foret, et en ce que la section transversale dudit évidement (40) diminue en direction axiale vers l'avant.

2. Un foret selon la revendication 1, caractérisé en ce que ledit évidement (40) est orienté au centre d'une surface inférieure (21) de la pointe (12) de foret et perpendiculairement cette surface et comprend une partie (41) de face d'entrée qui coupe ladite surface intérieure (21) et est d'une configuration convexe dont le diamètre de section transversale diminue vers l'avant, une surface conique (42) qui est adjacente à ladite face (41) d'entrée et dont la pointe de cône est orientée vers l'avant, une face de transition (43) qui se raccorde à ladite surface conique (42) et présente une configuration concave dont le diamètre de section transversale diminue et une surface de fond conique (44) qui coupe ladite face de transition (43).

3. Foret selon la revendication 1, caractérisé en ce que la configuration de base de la partie rigide (27, 27', 27'', 27''') est cylindrique, au moins une partie (30, 30A, 30B, 30C) de son extrémité axiale tournée vers l'avant, qui est prévue pour s'engager avec ledit évidement (40), étant d'une configuration partiellement sphérique ou conique.

4. Foret selon la revendication 1, caractérisé en ce que la configuration de base de ladite partie rigide (32) est sphérique.

5. Foret selon l'une quelconque des revendications 1, 3 et 4, caractérisé en ce que la partie élastique consiste en caoutchouc, en un ressort à boudin ou en un ensemble élastique.

6. Foret selon l'une des revendications 1 à 3, caractérisé en ce que la partie rigide (2''') et la partie élastique (28''') sont réalisées d'un seul tenant sous forme d'une pièce unique et en ce que des fentes (35) sont ménagées dans l'élément (22) perpendiculairement à la direction axiale de celui-ci.

7. Foret selon la revendication 5, caractérisé en ce que la partie élastique (28, 28', 28'') est en caoutchouc d'un configuration en tronc de cône dont la base est située vers l'arrière selon la direction axiale du foret, ou que sa configuration de base est un cylindre dont l'extrémité arrière comporte une nervure annulaire (34).

8. Foret selon la revendication 1, caractérisé en ce que le corps (11) de foret comprend un premier canal central (17) dont l'extrémité située axialement en avant communique, à une certaine distance axiale en arrière de la surface frontale (16), avec deux autres canaux (17A, 17B) et chacun desdits autres canaux est orienté selon un angle aigu (α) par rapport à l'axe (CL) du foret, d'une manière telle que l'orifice de chacun desdits autres canaux est situé à la fois dans la surface d'enveloppe (11A) et dans la surface frontale (16) du corps de foret et ladite pointe (12) de foret comportant deux canaux (36A, 36B) orientés en parallèle à l'axe (CL) de foret, qui sont réalisés sous la forme d'évidements dans la surface d'enveloppe (12A) de la pointe du foret de sorte que ces dits derniers canaux (36A, 36B) constituent des prolongements continus desdits autres canaux (17A, 17B).
